# EUROPEAN PATENT APPLICATION

(11) **EP 1 475 132 A2**
(43) Date of publication of application: **10.11.2004**
(21) Application number: 04005607.9
(22) Date of filing: 09.03.2004
(51) Int. Cl.: A63F 13/10, A63F 13/00

(54) **Control of object parameter in computer game**

(30) Priority: 10.03.2003 JP 2003063915
(71) Applicant: Kabushiki Kaisha Square Enix, Tokyo 151-8544 (JP)
(72) Inventor: Sato, Yasuhiro, Shibuya-ku Tokyo 151-8544 (JP)
(74) Representative: Grünecker, Kinkeldey, Stockmair & Schwanhäusser Anwaltssozietät

(57) **Abstract**

A method for controlling parameters of characters of the same type can appear in a new pattern with a small amount of data. The method includes storing each type in association with a counter and an initial value of the counter. The method further includes storing for the type at least two kinds of initial parameters, i.e., a regular parameter and a special parameter, and a condition the counter value must satisfy in order to switch from the regular parameter to the special parameter. When the counter value is determined to satisfy the condition and when the object of the type associated with the condition satisfying counter is active, the parameter of the active object is shifted. When the shifted object is determined to be inactive, the counter value of the shifted object is set to the initial value.

## Description

The present invention relates to a method for controlling parameters of an object such as a character in a computer game. Furthermore, the present invention relates to an apparatus, a game device, a computer readable program and a recording medium for realizing the method.

In most computer games, a game progress is determined based upon units of objects such as characters. For a role-playing game (RPG) in particular, the appearances and deaths of battle characters in battle scenes among the objects have a great influence on the game quality.

For the above, players may lose their interest in the game, if an enemy character to be fought in a battle scene never changes.

To prevent players from losing their interest, a video game has been invented in which players can battle a stronger enemy character in accordance with level progress or in which an enemy character transforms to have different battle ability characteristics, as disclosed in Japanese Patent Application Publication No. H11-114227.

For example, there is a video game in which enemy characters having weak battle abilities first appear when a party enters a dungeon, and after a player defeats all the enemy characters having the weak abilities, the other enemy characters having stronger battle abilities appear.

There is also a video game in which a certain enemy character having a normal battle ability transforms itself from a first mode having a normal shape to a second mode having a bigger shape as a result of damage from the player's attacks. The battle parameters and the like also change in accordance with the change of shape.

In these games, however, data of animations or effects and so on should be prepared for each kind of enemy character.

To solve the problem, a system is proposed where the parameters of an enemy character are calculated and set based upon a player character's level at the first encounter with the enemy character as disclosed in Japanese Patent Application Publication No. H11-114227.

However, a method for realizing stochastic fluctuation for each type of enemy characters or a simple method for taking statistics has not been established. As a result, it has not been realized to instantly change the battle parameters of a character group to improve the game quality.

The present invention is made in view of these problems. It is the object of the present invention to solve the problem that data for every kind of characters should be prepared for enhancing the game quality to prevent the players from losing their interest. An object of the present invention is to provide a method for controlling parameters of characters in a computer game whereby characters (especially enemy characters) can appear in a new pattern with a small amount of data.

In order to achieve the object, according to a first aspect of the invention, there is provided a method for controlling a parameter of an object in a computer game. The method includes storing a plurality of objects in association with a type. The method further includes storing for the type a counter and an initial value of the counter. The method further includes storing for the type at least two kinds of initial parameters, i.e., a regular parameter and a special parameter, and a condition the counter value must satisfy in order to switch from the regular parameter to the special parameter. The method further includes updating the counter value in accordance with game progress and determining whether the counter value satisfies the condition. The method further includes, when the counter value is determined to satisfy the condition and when the object is active and of the type associated with the condition satisfying counter, shifting the parameter of the active object to the special parameter.

By the method, a new pattern of appearance of enemy characters (set) having different parameters can be provided based upon data such as animations, etc., prepared for one kind (called type or class hereinafter) of character (object). As a result, the game quality is improved and players can keep their interest longer.

The type can be stored (defined) hierarchically by at least two stages, and the variable like a flag or a counter, etc., that corresponds to a certain type can be replaced with the variable of a super type to which the type belongs. For example, "ghost" is defined as the super type of at least two types having battle parameters similar but slightly different from each other ("ghosts race A" and "ghost race B", for example). The battle parameters of the obj ects ("No.1 belonging to the ghost race A", "No.2 belonging to the ghost race A", "No.1 belonging to the ghost race B", "No.2 belonging to the ghost race B" and "No.3 belonging to the ghost race B", for example) of these multiple similar types ("ghost race A" and "ghost race B") can be controlled based upon the change of the sole variable (e.g., the number of defeated objects) of the super type "ghost". It should be obvious to one skilled in the art that, in the definition of the hierarchy of the type, default initial (battle) parameters or shifted initial (battle) parameters could vary for each of the sub-types. Furthermore, similar processing can be executed by using other techniques than object-oriented programming such as the hierarchy of the type (class).

Furthermore, bitmaps or effects may be prepared for the character of the object whose initial parameters are shifted, which bitmaps or effects are different from those for the character of the object whose parameters are not shifted. For example, an aura-shaped luster may be displayed around the character or letters indicating the shift may be displayed above the character's head. In this case, although the data-saving is limited, the development costs can be saved notably when compared with the development of new characters or modes.

The method may further include determining whether the object whose parameter is shifted to the initial parameter corresponding to the conditions becomes inactive. The method may further include, when the object is determined as being inactive, setting the variable corresponding to the type of the object whose parameter is shifted to the initial parameter corresponding to the condition to the initial value.

This realizes the repetition of the new pattern of appearance.

The method may further include, when the counter value is determined to satisfy the condition and when the object is inactive and associated with the type corresponding to the counter value satisfying the condition, storing a command or a flag for shifting the parameter of the object of the type corresponding to the counter value satisfying the condition to the special parameter when the object becomes active. The method may further include clearing the command or the flag after the parameter of at least one of the objects of the type corresponding to the counter value satisfying the condition is shifted to the special parameter by the command or the flag.

By the method, a statistical behavior of a character group belonging to a single type can be maintained throughout multiple battle scenes.

In the method, the counter value may be updated when the object of the type corresponding to the variable to be updated becomes inactive. Furthermore, the counter value may be updated by incrementing the counter value close to the condition.

By the method, the statistics for determining the frequency or timing of parameter shift of enemy characters belonging to a single type can be taken effectively. The necessary amount of memory should be also reduced. Thus, debugging is easier.

Furthermore, in the method, the counter value may be updated when the object of the type corresponding to the variable to be updated is affected by another object. Furthermore, the counter value may be updated by incrementing the counter value close to the condition.

By the method, the parameter shift can be executed based upon not only the statistical data but also an event, etc., and thereby various new patterns of appearance of the enemy characters are realized with little amount of data. Consequently, the game quality is improved and players' interests are maintained over the long term.

It is advantageous that the initial parameter is a maximum hit point, a maximum magic point or the combination thereof. This enables the player to grasp the situation where the parameters of some characters belonging to a certain race are shifted based upon the increase of the maximum hit points. Consequently, the player can understand the complicated game quality of the scene without showy effects. Furthermore, in the case where the indicator of the enemy character is also displayed, the player can grasp directly the effect brought about by the parameter shift of the enemy character.

Here, the hit point (normally abbreviated as "HP") indicates the momentary endurance against attacks by the opponent (player). The consumed HP indicates the amount of damage given by the attack, and the present HP is obtained by subtracting the consumed HP from the maximum HP. The value of the HP is normally determined based upon the character' s level. As to the main character controlled by the player, the value increases as the character' s level goes up in accordance with the game progress. Furthermore, the value of the consumed HP increases when the enemy character damages the character during a battle, and it decreases (is restored) as time passes or when the character takes a rest or is subjected to the magic of healing. When the value of the consumed hit point becomes equal to the value of maximum hit point, that is, when the present hit points becomes zero, the character's endurance is interpreted as being pushed to the limit, and the character is defeated (unable to fight, disappears, etc.). Furthermore, the means for attacking may be limited based upon the present HP (the difference between the maximum HP and the consumed HP). Thus, the HP is the most important parameter that determines the basic ability of the character.

Two variables (constants) should prepared for any two of the magic point, the maximum magic point and the consumed magic point, regardless of their names, but three variables (addresses in a RAM) may be prepared for the implementation. The magic points (normally abbreviated as "MP") indicate the character's ability for magic, and the maximum MP indicates the value of MP that has not been consumed and corresponds to the current character's level. The consumed MP indicates the amount of magic that the character used. The behavior of the MP, maximum MP and consumed MP is similar to that of the HP, but the value of the consumed magic points reflects not the damage give by the enemy but the amount of magic energy that the character has used. Thus, even when the value of the MP becomes zero, that is, when the value of maximum magic points becomes equal to that of the consumed magic points, the character does not disappear. The implementation is the same as that of the HP.

Players can grasp the change in character's behavior caused by such a parameter shift even remarkable change in its appearance, and this leads to improvement of the game quality. Consequently, players can keep their interest in the game longer. It should be noted that the control of the parameters having similar characteristics could be within the technical range of the present invention, even when their names or functions are slightly different from those of the above-mentioned parameters.

According to a second aspect of the present invention, an apparatus is provided which controls a parameter of an object in a computer game. The apparatus includes an object storage that stores a plurality of objects in association with a type. The apparatus further includes a type counter storage that stores for the type a counter and an initial value of the counter. The apparatus further includes a parameter storage that stores for the type at least two kinds of initial parameters, i.e., a regular parameter and a special parameter, and a condition the counter value must satisfy in order to switch from the regular parameter to the special parameter. The apparatus further includes an updating system that updates the counter value in accordance with game progress and a first determining system that determines whether the counter value satisfies the condition. The apparatus further includes a shifting system that shifts, when the first determining system determines that the counter value satisfies the condition and when the object is active and of the type associated with the condition satisfying counter, the parameter of the active object to the special parameter.

The apparatus may further include a second determining system that determines whether the shifted object becomes inactive. The apparatus may further include a resetting system that sets, when the second determining system determines that the object becomes inactive, the counter value corresponding to the type of shifted object to the initial value.

The apparatus may further include a shift request storage. The shift request storage may store a command or a flag when the first determining system determines that the counter value satisfies the condition and when the object is inactive and associated with the type corresponding to the counter value satisfying the condition. The command or flag shifts the parameter of the object of the type corresponding to the counter value satisfying the condition to the special parameter when the object becomes active. The apparatus may further include a request clearing system. The request clearing system may clear the command or the flag after the parameter of at least one of the active objects of the type corresponding to the counter value satisfying the condition is shifted to the special parameter by the command or the flag.

The updating system may update the counter value when the object of the type corresponding to the counter value to be updated becomes inactive. The updating system may also update the value by incrementing the counter value close to the condition.

Furthermore, the updating system may update the counter value when the object of the type corresponding to the counter value to be updated is affected by another object. The updating system may also update the counter value by incrementing the counter value close to the condition.

According to a third aspect of the present invention, there is provided a game device that includes means for implementing the above methods or includes the above apparatuses.

According to a fourth aspect of the present invention, there is provided a computer program for causing a computer to implement the above methods or for causing the computer or a part of the computer to operate as means for implementing the above methods.

According to a fifth aspect of the present invention, there is provided a computer-readable recording medium on which is recorded a program according to the fourth aspect of the present invention.
Fig. 1 is a block diagram showing a game apparatus according to an embodiment of the invention;
Fig. 2 is a view showing each of storage areas of a CD-ROM inserted into the game apparatus of Fig. 1;
Fig. 3 is a view showing each storage area of a RAM in the game apparatus of Fig. 1;
Fig. 4 is a flowchart showing a control of character's parameters according to an embodiment of the invention;
Fig. 5 is a view showing display contents displayed according to an embodiment of the flowchart of Fig. 4;
Fig. 6 is a view showing a storage structure of two kinds of initial parameters and shift (over-soul) conditions stored in a constant area in a related data storage area of the RAM according to an embodiment of the flowchart of Fig. 4;
Fig. 7 is a view showing a storage structure of skills, conditions for actions and effects stored in a constant area in a related data storage area of the RAM according to an embodiment of the flowchart of Fig. 4;
Fig. 8 is a view showing a storage structure of the number of defeated characters for each type (kind) and a shift flag stored in a constant area in a related data storage area of the RAM according to an embodiment of the flowchart of Fig. 4;
Fig. 9 is a view showing attributes and statuses of each object stored in a related data storage area of the RAM according to an embodiment of the flowchart of Fig. 4;
Fig. 10 is a flowchart showing a control of a character's parameter according to another embodiment of the invention;
Fig. 11 is a view showing display contents displayed according to one embodiment of the flowchart of Fig. 10;
Fig. 12 is a view showing a storage structure of two kinds of initial parameters and shift (over-soul) conditions stored in a constant area in a related data storage area of the RAM according to an embodiment of the flowchart of Fig. 10;
Fig. 13 is a view showing a storage structure of skills, conditions for actions and effects stored in a constant area in a related data storage area of the RAM according to an embodiment of the flowchart of Fig. 10;
Fig. 14 is a view showing a storage structure of the number of defeated characters for each type (kind) and a shift flag stored in a constant area in a related data storage area of the RAM according to embodiment of the flowchart of Fig. 10; and
Fig. 15 is a view showing attributes and statuses of each object stored in a related data storage area of the RAM according to an embodiment of the flowchart of Fig. 10.

Preferred embodiments of the invention will be explained in detail with reference to the appended drawings.

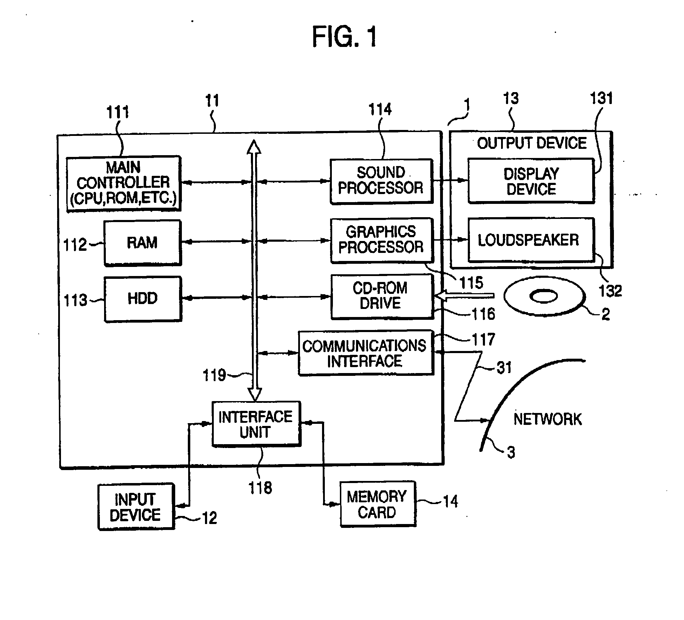

Fig. 1 illustrates a structure of a game device 1 used in a game system of the present invention. The game device 1 includes a game device main body 11, an input device 12, an output device 13 and a memory card 14. Provided with software that implements a specific game title via a CD-ROM (or DVD-ROM) 2 or a network 3, the game device 1 operates as the game system to execute the specific game title for a player.

Furthermore, the game device main body 11 includes a main controller 111, a random access memory (RAM) 112, a hard disc drive (HDD) 113, a sound processor 114, a graphics processor 115, a CD-ROM (Read Only Memory) drive 116, a communications interface 117 and an interface unit 118. A CPU (Central Processing Unit) or a ROM is embedded in the main controller 111. A bus 119 is provided for connecting these components 111-118 with each other.

The main controller 111 controls a game by using the CPU or the ROM. Specifically, the main controller executes processing in consideration of a predetermined timing of the input (key, reading of CD-ROM, etc.) and the output (images, sounds, etc.).

The CPU of the main controller 111 uses the RAM 112 as a main storage for executing a program. In the RAM 112, the program executed by the CPU and the related data for executing the program, etc., are stored.

The CPU of the main controller 111 uses the HDD 113 as an auxiliary storage for executing the program. In the HDD 113, there are stored various data or programs such as information downloaded via the communications interface 117 or read from the CD-ROM 2 or information for storing game status.

The sound processor 114 is a circuit for playing sound data such as a background music, sound effects, etc., of the game. The sound processor 114 receives an instruction from the main controller 111. Upon receiving the instruction, the sound processor 114 generates a sound signal based upon the data stored in the RAM 112 or the CD-ROM 2, and outputs the signal to the output device 13.

The graphics processor 115 includes a frame buffer (not shown) on which it draws images in accordance with the instruction from the main controller 111. The graphics processor 115 adds a predetermined signal to the image data drawn on the frame buffer to generate a video signal, and outputs the video signal to the output device 13.

The CD-ROM drive 116 reads data from the CD-ROM 2 serving as a recording medium.

The communications interface 117 controls communications when sending/receiving data to/from other game devices or a game server connected to the network 3. The data downloaded from the network 3 via the communications interface 117 and a communications line 31 can be stored in the HDD 113.

The input device 12 and the memory card 14 are detachably connected to the interface unit 118. The interface unit 118 controls data transmission between each of the components 111-117 connected to the bus 119 and the input device 12 or the memory card 14.

As described in the above, in the CD-ROM 2, there are stored program for processing the game, the related data such as initial parameters, image data, sound data, etc. In short, there are stored a game software (game title).

The input device 12 includes a controller operated by the player to input various instructions regarding the game. The input device 12 transmits an instruction signal corresponding to the operation by the player to the game device main body 11 via the interface unit 118.

The output device 13 displays images based upon image signals and outputs sounds based upon sound signals, which signals are transmitted from the game device main body based upon timing controlled by the program. In the present embodiment, a monitor device with a built-in loudspeaker such as a television set, for example, is used as the output device 13. The output device 13 includes a display device 131 (a cathode-ray tube or a liquid crystal panel) for displaying images and a loudspeaker 132 for outputting sounds.

A flash memory constitutes the memory card 14. The game device main body 11 controls the memory card 14. The memory card 14 serves as the auxiliary storage for storing game data, especially saved data. The main controller 111 controls writing/reading data to/from the memory card 14 via the interface unit 118.

The main controller 111 controls all of these devices. The main controller 111 controls the game device main body 11 based upon basic software such as a BIOS stored in the ROM or the game software (program and data) that is read from the CD-ROM 2 and stored in the RAM 112, and thereby controls the overall operation of the game device 1.

The CPU, for example, reads graphics data corresponding to the parameters of an enemy character to be displayed from the CD-ROM 2 to the RAM 112. Then, the CPU transfers the graphics data from the RAM 112 to the graphics processor 115 and instructs the generation of the image. In response to the instruction, the graphics processor 115 expands the graphics data of the enemy character on the frame buffer and generates a video signal based upon the frame buffer. The video signal is transmitted to the output device 13. Thus, the image of the enemy character is displayed on a display device 131. The same processing is applied to sounds of characters' movement and attacks. The sound information is sent from the CD-ROM 2 to the RAM 112, the sound processor 114, the output device 13, and then the loudspeaker 132.

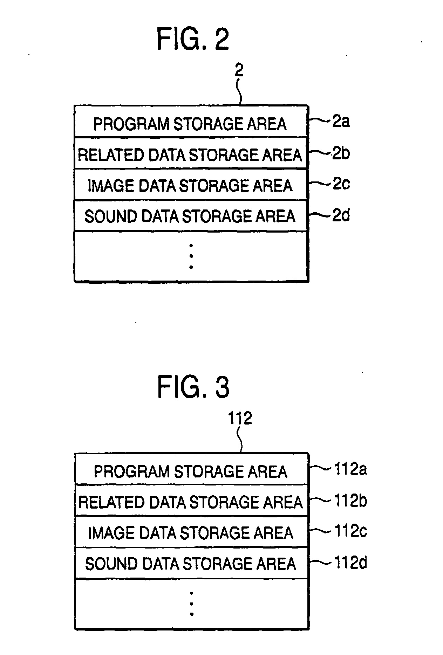

As shown in Fig. 2, the CD-ROM 2 includes a program storage area 2a that stores the game program executed by the main controller 111 and a related data storage area 2b that stores the related data necessary during game progress. Furthermore, the CD-ROM 2 includes an image data storage area 2c that stores two-dimensional (bit-map) image data such as backgrounds, characters or icons specific to the game and three-dimensional model data. The CD-ROM 2 also includes a sound data storage area 2d that stores sound data such as a sound effect.

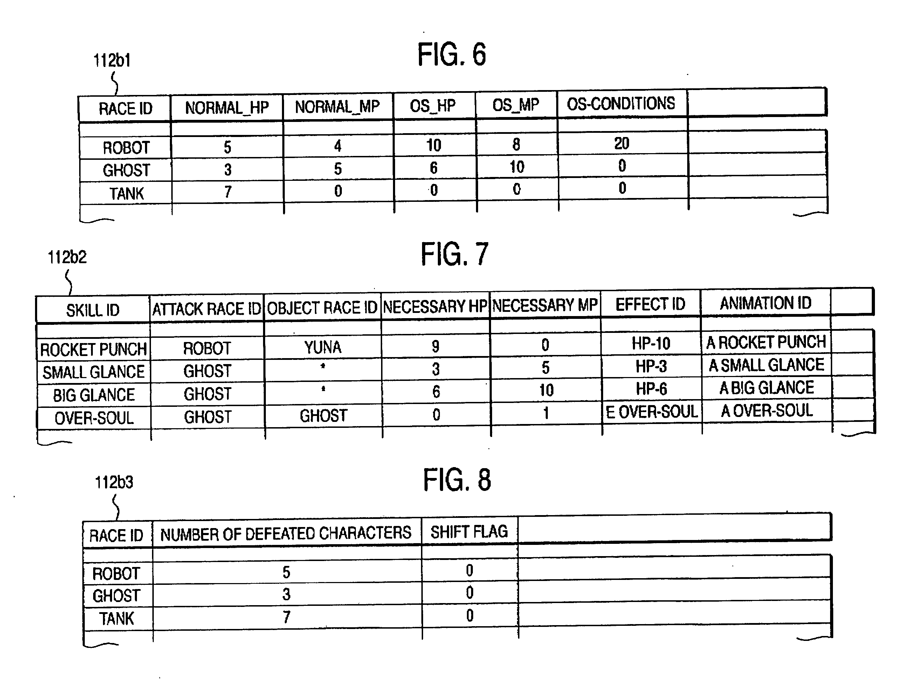

Among these data stored in the CD-ROM 2, some kinds of data are transmitted all at once to the RAM 112, the HDD 113, the sound processor 114 or the graphics processor 115, while other kinds of data are transmitted as needed. Furthermore, among the data stored in the CD-ROM 2, static data that are frequently used or dynamic data to be maintained throughout the game progress are stored in the RAM 112. As shown in Fig. 3, the RAM 112, in a similar way as the CD-ROM 2, includes a program storage area 112a, a related data storage area 112b, an image data storage area 112c and a sound data storage area 112d. It should be noted, however, that the related data storage area 2b of the CD-ROM 2 stores only static data (constant area) while the related data storage area 112b of the RAM 112 stores dynamic data reflecting a player's on-going game progress (variable area). The structure of each of the constant area and the variable area will be described later with the reference to Figs. 6-9.

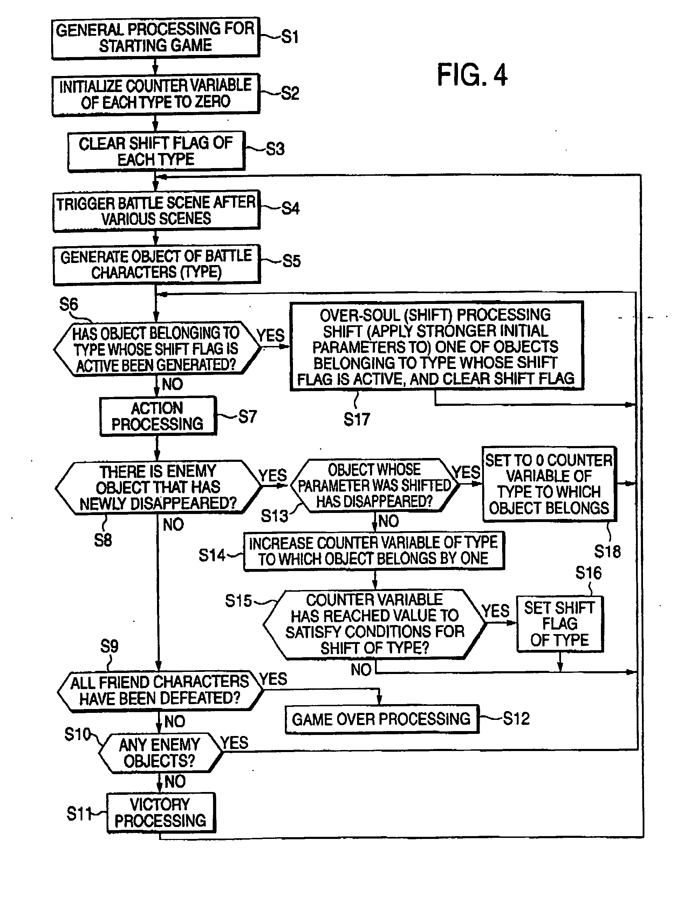

Fig. 4 is a flowchart showing a processing procedure for controlling character's parameters in an embodiment.

First, general processing for starting a game is executed at step S1. The general processing includes reading a main game program from the CD-ROM 2 into the program storage area 112a of the RAM 112. The main controller 111 executes the main program and prepares for the subsequent processing shown in the flowchart of Fig. 4. Furthermore, although not shown in Fig. 4, the processing includes initializing each device (or the frame buffer of each device) , allocating the variable area to be used in the game on the RAM 112, initializing the variable area, and reading the frequently used image/sound data into the RAM 112.

Steps S2 and S3 are steps extracted from the initialization of the variable area in connection with the present invention. At step S2, a counter variable of each type (e.g., race) is initialized to zero. The counter variable indicates how many characters belonging to a certain race are defeated by a player. At step S3, a shift flag of each type (e.g., race) is initialized (cleared to zero). The shift flag stores information that ability parameters of an object (e.g., character) belonging to the type corresponding to the flag should be shifted to be stronger the next time the object appears.

At step S4, an image display, a sound output and a key input are processed in accordance with various scenes such as exploring the land, buying and selling arms, assembling companions or collecting information. When a situation where a battle should be started is detected, such as encountering an enemy party or being caught up to by the enemy party, the battle is triggered. The processing of these scenes and the trigger of the battle are obvious to those skilled in the art, therefore the detailed explanation will be omitted.

At step S5, enemy obj ects related to the battle, i.e., enemy characters are generated and displayed on the display device 131 in company with friend characters such as a main character controlled by a player, etc.

At step S6, it is determined whether the enemy character whose initial parameter should be shifted is generated (displayed). Here, because the initialization has been already executed at step 3, the enemy character whose initial parameter should be initialized does not exist, therefore the processing flow proceeds to step S7.

At step S7, one of the friend characters whose turn has come attacks one of the enemy characters, restores another friend character or the character itself, or starts a special effect on another friend character. Thus, a certain character on the display device 131 is damaged (its hit points or magic points decrease, or its consumed hit points or consumed magic points increase), or is restored (its hit points or magic points increase, or its consumed hit points or consumed magic points decrease). There is a case where the value of a character' s hit points become zero, that is, the value of its consumed hit points becomes equal to the value of its maximum hit points. In this case, the character is defeated and disappears from the display.

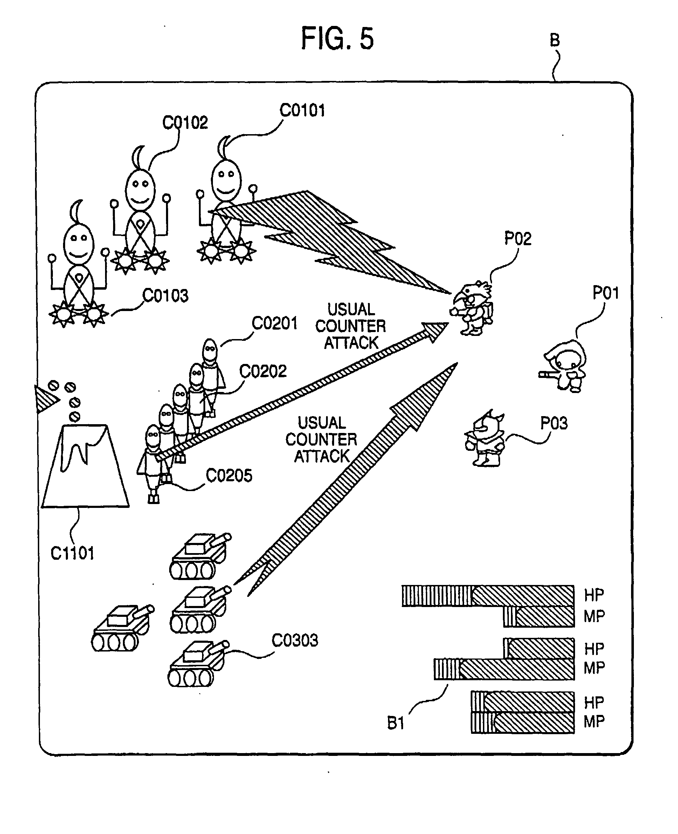

Fig. 5 shows an image displayed on the display device 131 at step S7. Figs. 6-9 show a part of a storage structure of the maximum hit points, consumed hit points, etc., stored in the related data storage area 112b of the RAM 112.

In Fig 5, various characters C0101-C0303 and P01-P03 including both friend and enemy characters and their attacks are displayed in a display frame B of the display device 131. There are also displayed each friend character's maximum hit points, current hit points, maximum magic points and current magic points B1. The current hit points are the maximum hit points minus the consumed hit points.

In the left side of the frame B, twelve enemy characters of three races and a volcano character are displayed. More specifically, there are displayed, starting from the top of the frame, three enemy robot characters C0101-C0103, five enemy ghost characters C0201-C0205, one enemy volcano character C1101 and four enemy tank characters C0303. In the right side of the frame B, three friend characters P01-P03 are displayed. Furthermore, in the middle of the frame B, there are displayed the attacks from the friend character P02 to the robot character C0101, from the ghost character C0205 to the friend character P02, and from the tank character C0303 to the friend character P02.

Figs. 6-9 show a portion of a storage structure of the related data storage area 112b of the RAM 112. In the constant area, there is a table 112b1 that stores the initial parameters of each of the enemy characters and a table 112b2 that stores attributes of skill available to each of the races. In the variable area, meanwhile, there is a table 112b3 that stores integer variables representing the number of defeated enemy characters for each race in an on-going game play and Boolean variables representing whether the shift of initial parameters as described above is requested. In the variable area, there is also a table 112b4 that stores present parameters of each of the characters (objects).

The contents of these four tables (two-dimensional arrays) 112b1-112b4 will be explained in detail. In the table 112b1 that stores the initial parameters for each of the races of enemy characters, the first row indicates that the enemy characters belonging to the race of robots have five points as their maximum hit points and four points as their magic points when the robot characters (objects) are first generated. Furthermore, the first row indicates that one robot character (object) having ten points as its maximum hit points and eight points as its maximum magic points is generated when the number of robot characters defeated by a player reaches twenty. The second row indicates the initial parameters of ghost characters in a similar way as the first row. In the second row for the race of ghosts, the "OS conditions" is zero, and this means that the over-soul does not take place based upon the number of the ghost characters defeated by the player. In the third row, both OS_HP (over-soul hit points) and OS_MP (over-soul magic points) for tank characters are zero, and this indicates that the over-soul never takes place with respect to the tank characters. The developers of the game design such information and store the information in advance as related data in the related area storage area 2b of the CD-ROM 2.

In the table 112b2 that stores the attributes of skills of the enemy characters, the first row indicates that only the enemy character "robot" can perform the skill "rocket punch" to damage a friend character named "Yuna" P01. The first row also indicates that the robot character should have nine hit points for performing the "robot punch", and that no magic points are necessary for the robot punch. Furthermore, the first row indicates the value of hit points of the friend character "Yuna" P01 decreases by ten points on average when the rocket punch hits the character "Yuna". It further indicates that an ID (array index) of an animation (on a pointer table to data) representing the robot's attack to the character "Yuna" is A rocket punch (integer 0, for example).

The second and third rows relates to the skills named "small glance" and "big glance" that the ghost character can exercise on any other characters " * " . As shown in the second row, the ghost character should have three hit points and five magic points for performing the "small glance", which points are equal to the initial parameters of the normal (not over-soul) ghost character. As shown in the third row, meanwhile, the ghost character should have six hit points and ten magic points for performing the "big glance", which points are equal to the initial parameters of the over-soul ghost. As seen from the second row and the third row, the effects and animation of the two skills are different from each other.

The fourth row indicates that the ghost character can exercise the over- soul on another ghost character and that the ghost character should have one point as the magic point to exercise the over-soul. The fourth row also indicates that the ID of the animation representing the ghost character's over-soul on another ghost character is A over-soul.

In the table 112b3 showing the number of defeated characters for each race and the shift flag, the first row indicates that five robot characters (objects) have been defeated and that there is no request for performing the over-soul on the object to be generated next time. No requests for over-soul exist for the ghosts and tanks as indicated in the second and third rows.

In the table 112b4 showing the present parameter for each of the objects, the first row indicates the present parameters of the object C0101 belonging to the race of robots. More specifically, the object C0101 has five points as the maximum hit points, four points as the consumed hit points, four points as the maximum magic points and zero point as the consumed magic points. Furthermore, the active flag having a value of one indicates the object C0101 is still alive. The over-soul flag having a value of zero indicates the over-soul (having ten points as the maximum hit points and eight points as the maximum magic points as indicated in the first row of the table 112b1) has not been performed on the object C0101 yet. Although the subsequent rows display data in a similar manner, it should be noted that the table 112b4 stores, unlike the table 112b1, the present parameters of multiple characters belonging to the same race (type).

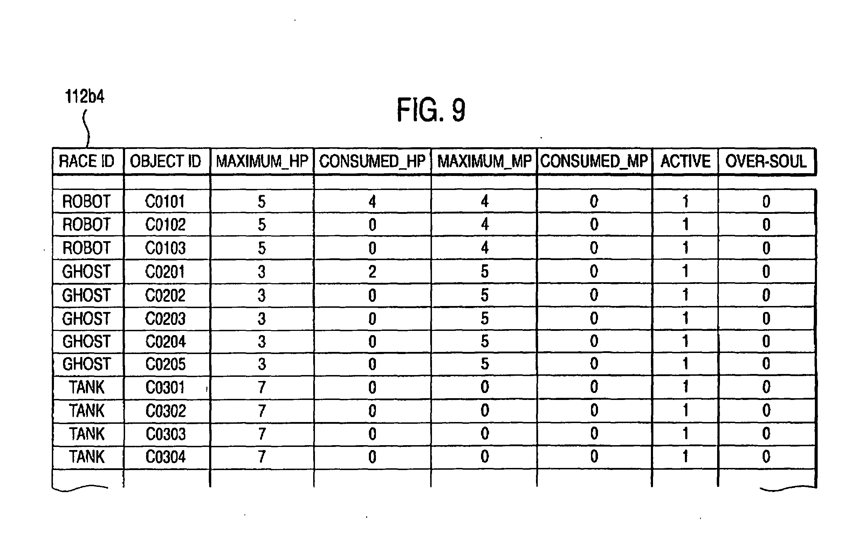

Now, referring back to step S7 of the flowchart of Fig.7, the contents of the variable area tables 112b3 and 112b4 of Figs. 8 and 9 are updated in response to the attacks or effects by each of the characters.

For example, when the friend character P02 attacks the robot character C0101, the value of the consumed hit points of the robot character indicated in the first row of the table 112b4 changes from four to five. Then, the robot character C0101 is controlled to disappear, and the active flag in the first row changes from one to zero. Accordingly, the number of defeated characters belonging to the robot race indicated in the first row of the table 112b3 of Fig. 8 is updated from five to six.

This process corresponds to steps S8, S13 and S14. In other words, at step S8, it is detected whether, in the table 112b4 of the Fig. 9, there is an object of which the value of the maximum hit points is equal to the value of the consumed hit points and of which the active flag is set to one. When there is an object meeting such conditions (here, the robot object C0101 is detected), the active flag in the corresponding row is updated to zero. Then, at step S13, it is judged whether the over-soul in the corresponding row is one. Here, it is judged negatively, and the processing flow proceeds to step S14. At step S14, in the table 112b3 of Fig. 8, the number of the defeated characters of the robot race is incremented by one, e.g., updated to six.

At step S15, it is judged that the number of the defeated characters does not reach twenty, that is, the conditions for the over-soul of the race of robots as defined in the first row of the table 112b1. Then, the processing flow returns back to step S8, and the object C0102 is checked in a same way.

After all of the objects C0101-C0304 are checked in a similar way, the processing flow proceeds to step S9. At step S9, it is judged whether all friend characters P01-P03 are defeated. If all friend characters P01-P03 are defeated, the processing flow proceeds to S12, where the game ends. If there remains at least one friend character, it is judged whether there remains at least one enemy character (active flag being 1 in the table 112b4 of Fig. 9) at step S10. If there is no active enemy character, the processing flow proceeds to S11, and the processing of victory in the battle is executed. If there remains at least one enemy character, the processing flow returns back to step S6.

Battles are repeated as described above. when the number of the defeated characters (objects) belonging to the race of robots reaches twenty, which is equal to the conditions for the over-soul, step S15 proceeds to step S16. At step S16, the shift flag of the race of robots is set to one. That is, the shift flag in the first row of the table 112b3 of Fig. 8 becomes one. Then, at step S6, it is judged that the object belonging to the race whose shift flag is active has been generated. Accordingly, the processing flow proceeds to step S17.

At step S17, the over-soul is performed on the robot character C0102, for example (selected based upon random numbers or the ID sequence). In this case, the values of OS_HP and OS_MP defined in the first row of the table 112b1 of Fig.6, that is, ten and six, are substituted for the values of maximum HP and maximum MP in the second row of the table 112b4 of Fig.9, respectively. The values of consumed HP and consumed MP are initialized to zero. Then, the shift flag in the first row of the table 112b3 of Fig.8 is cleared from one to zero. Thus, the object on which the over-soul has been performed is only the robot character (object) C0102.

When the player defeats the object C0102, on which the over-soul has been performed, the processing flow proceeds from step S13 to step S18. As a result, the number of defeated characters indicated in the first row of the table 112b3 of Fig.8 is initialized to zero. Then, the processing flow returns back to S8, and the counting of the number of the defeated characters is restarted.

As described above, by adding a little storage capacity and a few steps, the parameter value of the objects belonging to the race of robots, for example, can be shifted based upon accumulated total value, and thereby the obj ect of the present invention is achieved. The obj ect whose parameters are shifted (the robot character C0102 in this embodiment) , becomes harder to defeat, due to its increased (maximum) hit points, with the same amount of attacks that the friend character P02 performs on the robot character C0101. Furthermore, its increased (maximum) magic points realize scenes, etc., where the robot character C0102 performs new kinds of magic. Such unpredictability enables players to keep their interest in the game longer. Furthermore, the enemy character on which the over-soul has been performed may possess a new item (diamond, for example) different from the item (gold coin, for example) that the enemy character had possessed before the over-soul was performed, and drop the new item when defeated. Although the parameter shift based upon statistics for only the race of robots is explained in the above, it is obvious that the same control can be applied to other races with the same table structure.

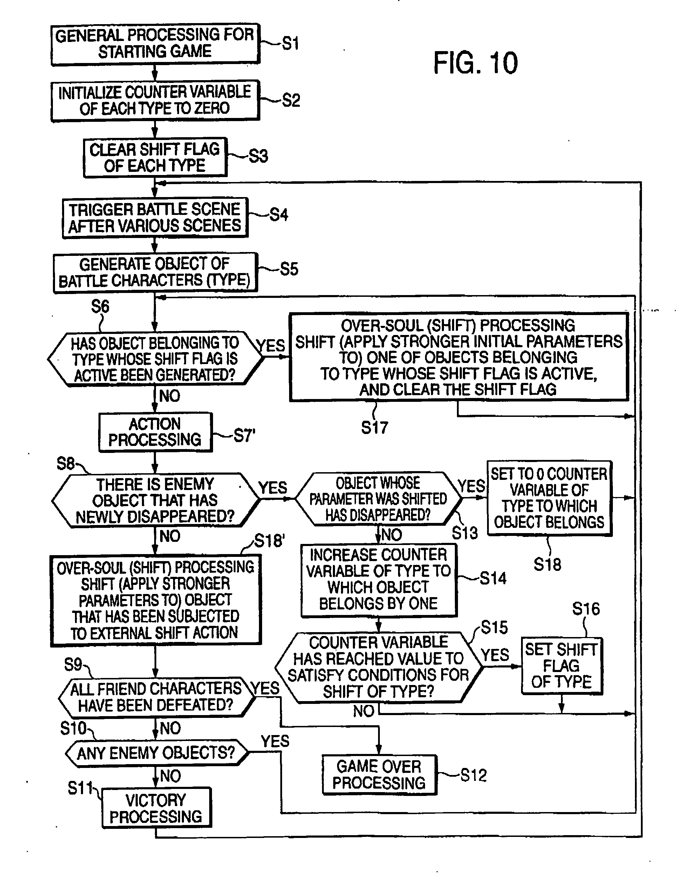

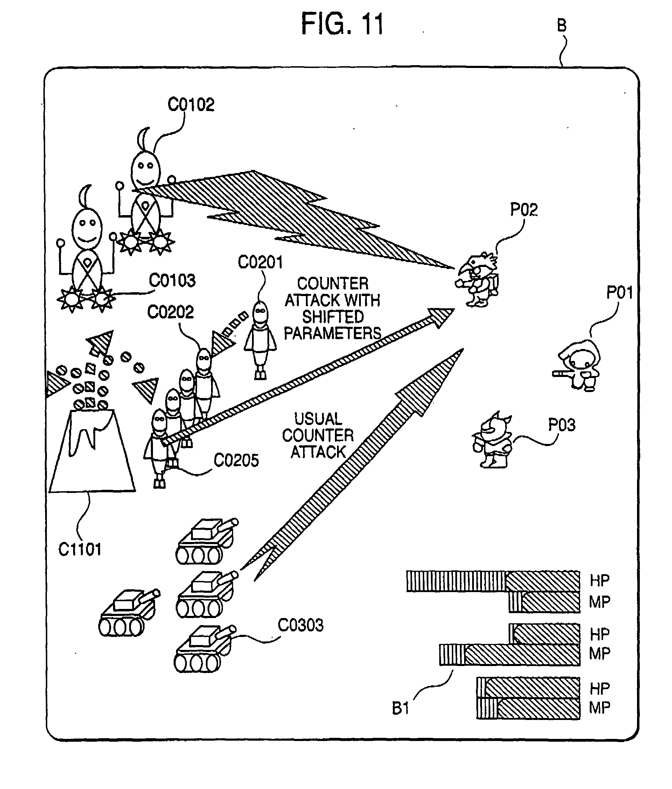

Fig. 10 is a flowchart showing a processing procedure according to another embodiment of the present invention, where the parameters of an object are shifted not by statistics but by another character's action. Figs. 11-15 show modifications of Figs. 5-9.

Compared with Fig. 4, in Fig. 10, step S7 is replaced with steps S7' and step S18' is added between steps S8 and S9. S18' is added for the over-soul (parameter shift) on the ghost character C0205, for example, which over-soul is caused not by the increase of the number of defeated characters but rather by external shift actions. Another ghost character (C0201) and another object (character) belonging to a race other than the race of robots, that is, the volcano character for example cause the external parameter shift. Although not shown, other objects such as the robot character C0103 or the friend character P03 can also cause the external parameter shift.

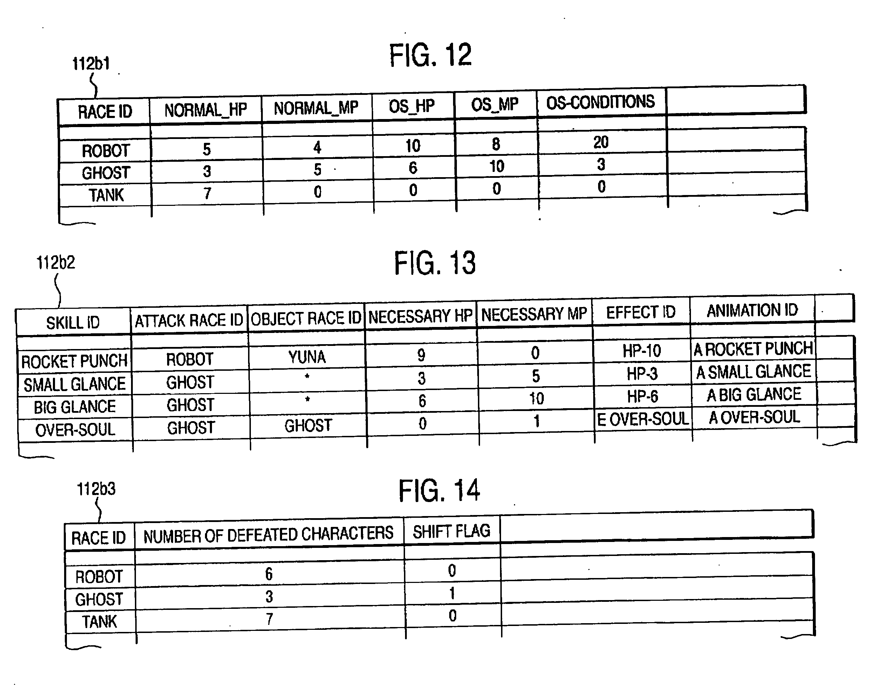

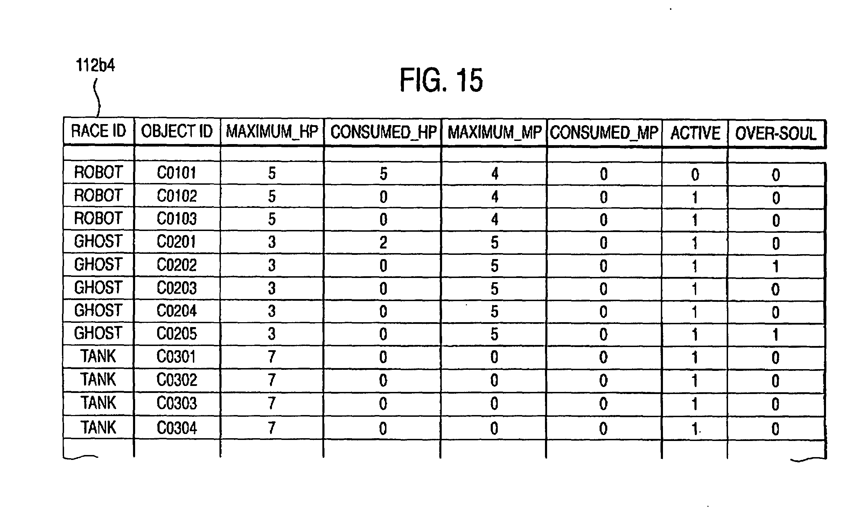

At step S7', the ghost character C0201 performs the over-soul command on another ghost character C0202 and a dotted arrow is displayed as shown in Fig. 11 in accordance with the skill ID of over-soul identified in the fourth row of table 112b2 of Fig. 13. Furthermore, at step S7', the volcano character 1101 performs the over-soul on the ghost character C0205 and a dotted line is displayed as shown in Fig. 11 in accordance with the skill ID of over-soul volcanic ash (not shown) defined in the table 112b2. Then, in table 112b4 of Fig. 15, the values of the over-soul column of the ghost characters C0202 and C0205 turn to one.

At step S18', an object is detected having a value of the maximum hit points or the maximum magic points not corresponding to the over-soul value defined in the table 112b1 even though its value in the over-soul column in the table 112b4 is one. Then, the values of the hit points and the magic points of the detected object are changed to the over-soul values defined in the table 112b1.

A counterattack from the robot character C0205 to the friend character P02 shown by a bold line in Fig. 11 indicates that it is stronger than the counterattack shown by a narrow line in Fig. 5.

Fig. 10 is a flowchart corresponding to the over-soul (parameter shift) caused both by the number of defeated characters and by external actions. This means that, even after the parameter of one of the ghost characters has been shifted by the external action as described above, another character can be subjected to the over-soul caused by the increase of the number of defeated characters, and vice versa. In both cases, when any ghost character on which the over-soul has been performed is defeated (has disappeared), the disappearance is detected at step S13. Then, the number of defeated characters counted in the table 112b3 is initialized to zero.

For example, an explanation will be given of the case where the over-soul is performed when the number of defeated ghost characters reaches three, as defined in the table 112b1. When the number of defeated ghost characters counted in the table 112b3 becomes three at step 14, the value of the shift flag of the race of ghosts is set to one. This information is delivered to step S6 via steps S15 and S16, and then the over-soul is performed on one of the ghost characters at step S17.

The same processing is applied when the last enemy character in the battle scene is defeated and thereby the conditions for the over-soul are satisfied. Thus, the structure of a shift flag realizes over-soul processing based upon statistics of multiple battle scenes.

It should be noted that the counter variable could have the function of shift flag in a simpler embodiment. That is, the counter variable satisfying the conditions can be interpreted as the active shift flag causing the over-soul to be performed.

According to the present invention, new patterns of appearance of enemy characters (sets) can be provided based upon data of animations, etc., prepared for characters (objects) belonging to one race (type). Thus, the game quality is improved, and players can keep their interest in the game.

Furthermore, a statistical behavior of a character group belonging to the same race can be maintained throughout multiple battle scenes.

Furthermore, the parameter shift can be executed based upon not only the statistical data but also an event, and thereby a new pattern of appearance of the enemy characters is realized offering more diversity. Consequently, the game quality is improved and players' interest is maintained over the long term.

Furthermore, players can grasp quickly the parameter shift of one of the characters belonging to the same type, and thereby they can grasp more complicated game quality of the scene.

Although embodiments have been explained for exemplifying the invention, the invention can be modified in ways other than what has been described. Modifications are within the technical range of the invention as long as the modifications are based on the spirit of the invention described in the claims.

Although the invention has been described with reference to several exemplary embodiments, it is understood that the words that have been used are words of description and illustration, rather than words of limitation. Changes may be maid within the purview of the appended claims, as presently stated and as amended, without departing from the scope and spirit of the invention in its aspects. Although the invention has been described with reference to particular means, materials and embodiments, the invention is not intended to be limited to the particulars disclosed; rather, the invention extends to all functionally equivalent structures, methods, and uses such as are within the scope of the appended claims.

## Claims

1. A method for controlling a parameter of an object in a computer game, comprising:
storing a plurality of objects in association with a type;
storing for the type a counter and an initial value of the counter;
storing for the type: at least two kinds of initial parameters comprising a regular parameter and a special parameter; and a condition the counter value must satisfy in order to switch from the regular parameter to the special parameter;
updating the counter value in accordance with game progress;
determining whether the counter value satisfies the condition; and
when the counter value satisfies the condition and when the object is active and of the type associated with the condition satisfying counter, shifting the parameter of the active object to the special parameter.

2. The method according to claim 1, further comprising:
determining whether the shifted object becomes inactive; and
when the shifted object is determined to be inactive, setting the counter value corresponding to the type of the shifted object to the initial value.

3. The method according to claim 1 or 2, further comprising:
when the counter value is determined to satisfy the condition and when the object is inactive and associated with the type corresponding to the counter value satisfying the condition, storing a command or a flag for shifting the parameter of the object of the type corresponding to the counter value satisfying the condition to the special parameter when the object becomes active; and
clearing the command or the flag after the parameter of at least one of the active objects of the type corresponding to the counter value satisfying the condition is shifted to the special parameter by the command or the flag.

4. The method according to any one of claims 1 to 3, in which the updating further comprises updating the counter value when the object of the type corresponding to the counter value to be updated becomes inactive; and
incrementing the counter value close to the condition.

5. The method according to any one of claims 1 to 3, in which the updating further comprises updating the counter value when the object of the type corresponding to the counter value to be updated is affected by another object; and
switching the counter value to the counter value satisfying the condition.

6. The method according to any one of claims 1 to 5, wherein the initial parameter comprises a maximum hit point, a maximum magic point or a combination of the maximum hit point and the maximum magic point.

7. An apparatus for controlling a parameter of an object in a computer game, comprising:
an object storage that stores a plurality of objects in association with a type;
a counter storage that stores for the type a counter and an initial value of the counter;
a parameter storage that stores for the type: at least two kinds of initial parameters comprising a regular parameter and a special parameter; and a condition the counter value must satisfy in order to switch from the regular parameter to the special parameter;
an updating system that updates the counter value in accordance with game progress;
a first determining system that determines whether the counter value satisfies the condition; and
a shifting system that, when the first determining system determines that the counter value satisfies the condition and when the object is active and of the type associated with the condition satisfying counter, shifts the parameter of the active object to the special parameter.

8. The apparatus according to claim 7, further comprising:
a second determining system that determines whether the shifted object becomes inactive; and
a resetting system that sets, when the second determining system determines that the object becomes inactive, the counter value corresponding to the type of the shifted object to the initial value.

9. The apparatus according to claim 7 or 8, further comprising:
a shift request storage that stores, when the first determining system determines that the counter value satisfying the condition and when the object is inactive and associated with the type corresponding to the counter value satisfying the condition, a command or a flag for shifting the parameter of the object of the type corresponding to the counter value satisfying the condition to the special parameter when the object becomes active; and
a request clearing system that clears the command or the flag after the parameter of at least one of the active objects of the type corresponding to the counter value satisfying the condition is shifted to the special parameter by the command or the flag.

10. The apparatus according to any one of claims 7 to 9, wherein the updating system updates the counter value when the object of the type corresponding to the counter value to be updated becomes inactive, and
wherein the updating system updates the value by incrementing the counter value close to the condition.

11. The apparatus according to any one of claims 7 to 9, wherein the updating system updates the counter value when the object of the type corresponding to the counter value to be updated is affected by another object, and
wherein the updating system updates the value by switching the counter value to the counter value satisfying the condition.

12. The apparatus according to any one of claims 7 to 11, wherein the initial parameter comprises a maximum hit point, a maximum magic point or a combination of the maximum hit point and the maximum magic point.

13. A program for controlling a parameter of an object in a computer game, comprising:
an object storing source code segment that stores a plurality of objects in association with a type;
a counter storing source code segment that stores for the type a counter and an initial value of the counter;
a parameter storing source code segment that stores for the type: at least two kinds of initial parameters comprising a regular parameter and a special parameter; and a condition the counter value must satisfy in order to switch from the regular parameter to the special parameter;
an updating source code segment that updates the counter value in accordance with game progress;
a determining source code segment that determines whether the counter value satisfies the condition; and
a shifting source code segment that, when the counter value satisfies the condition and when the object is active and of the type associated with the condition satisfying counter, shifts the parameter of the active object to the special parameter.

14. The program according to claim 13, further comprising:
an activity determining source code segment that determines whether the shifted object becomes inactive; and
a counter value setting source code segment that, when the shifted object is determined to be inactive, sets the counter value corresponding to the type of the shifted object to the initial value.

15. The program according to claim 13 or 14, further comprising:
a flag storing source code segment that, when the counter value is determined to satisfy the condition and when the object is inactive and associated with the type corresponding to the counter value satisfying the condition, stores a command or a flag for shifting the parameter of the object of the type corresponding to the counter value satisfying the condition to the special parameter when the object becomes active; and
a flag clearing source code segment that clears the command or the flag after the parameter of at least one of the active objects of the type corresponding to the counter value satisfying the condition is shifted to the special parameter by the command or the flag.

16. The program according to any one of claims 13 to 15, in which the updating source code segment further comprises updating the counter value when the object of the type corresponding to the counter value to be updated becomes inactive: and
an incrementing source code segment that increments the counter value close to the condition.

17. The program according to any one of claims 13 to 15, in which the updating source code segment further comprises updating the counter value when the object of the type corresponding to the counter value to be updated is affected by another object; and
a counter value switching source code segment that switches the counter value to the counter value satisfying the condition.

18. The program according to any of claims 13 to 17, wherein the initial parameter comprises a maximum hit point, a maximum magic point or a combination of the maximum hit point and the maximum magic point.

19. A computer readable recording medium storing a program for controlling a parameter of an object in a computer game, comprising:
an object storing source code segment that stores a plurality of objects in association with a type;
a counter storing source code segment that stores for the type a counter and an initial value of the counter;
a parameter storing source code segment that stores for the type: at least two kinds of initial parameters comprising a regular parameter and a special parameter; and a condition the counter value must satisfy in order to switch from the regular parameter to the special parameter;
an updating source code segment that updates the counter value in accordance with game progress;
a determining source code segment that determines whether the counter value satisfies the condition; and
a shifting source code segment that, when the counter value satisfies the condition and when the obj ect is active and of the type associated with the condition satisfying counter, shifts the parameter of the active object to the special parameter.

20. The medium according to claim 19, further comprising:
an activity determining source code segment that determines whether the shifted object becomes inactive; and
a counter value setting source code segment that, when the shifted object is determined to be inactive, sets the counter value corresponding to the type of the shifted object to the initial value.

21. The medium according to claim 19 or 20, further comprising:
a flag storing source code segment that, when the counter value is determined to satisfy the condition and when the object is inactive and associated with the type corresponding to the counter value satisfying the condition, stores a command or a flag for shifting the parameter of the object of the type corresponding to the counter value satisfying the condition to the special parameter when the object becomes active; and
a flag clearing source code segment that clears the command or the flag after the parameter of at least one of the active objects of the type corresponding to the counter value satisfying the condition is shifted to the special parameter by the command or the flag.

22. The medium according to any one of claims 19 to 21, in which the updating source code segment further comprises updating the counter value when the object of the type corresponding to the counter value to be updated becomes inactive; and
an incrementing source code segment that increments the counter value close to the condition.

23. The medium according to any one of claims 19 to 21, in which the updating source code segment further comprises updating the counter value when the object of the type corresponding to the counter value to be updated is affected by another object; and
a counter value switching source code segment that switches the counter value to the counter value satisfying the condition.

24. The medium according to any of claims 19 to 23, wherein the initial parameter comprises a maximum hit point, a maximum magic point or a combination of the maximum hit point and the maximum magic point.
